# EUROPEAN PATENT SPECIFICATION

(11) **EP 3 947 253 B1**
(45) Date of publication and mention of the grant of the patent: **07.05.2025**
(21) Application number: 20717380.8
(22) Date of filing: 06.03.2020
(51) Int. Cl.: B66F 11/04, E04G 1/22

(54) **FULLY-ELECTRIC SCISSOR LIFT**
VOLLSTÄNDIG ELEKTRISCHE SCHERENHEBEBÜHNE
PLATEFORME ÉLÉVATRICE À CISEAUX ENTIÈREMENT ÉLECTRIQUE

(30) Priority: 05.04.2019 US 201962829970 P
(43) Date of publication of application: 09.02.2022
(73) Proprietor: Oshkosh Corporation, Oshkosh, Wisconsin 54902-2566 (US)
(72) Inventor: BAFILE, Louis, Oshkosh, Wisconsin 54902-2566 (US); SHANKAR, Prabhu, Oshkosh, Wisconsin 54902-2566 (US); PRASETIAWAN, Eko, Oshkosh, Wisconsin 54902-2566 (US); HAO, Jihong, Greencastle, Pennsylvania 17225 (US); LOMBARDO, David, Oshkosh, Wisconsin 54902-2566 (US); WILLIAMS, Derek, Oshkosh, Wisconsin 54902-2566 (US); KOTLANGER, Brendan, Oshkosh, Wisconsin 54902-2566 (US); ARCURI, Paul, Oshkosh, Wisconsin 54902-2566 (US)
(74) Representative: Potter Clarkson
(86) International application number: PCT/US2020/021450
(87) International publication number: WO 2020/205161

(56) References cited:
- WO-A1-2015/134482
- JP-A- 2003 226 492
- US-A- 3 817 346

## Description

### CROSS-REFERENCE TO RELATED APPLICATION

This application claims the benefit of U.S. Provisional Application No. 62/829,970, filed April 5, 2019.

### BACKGROUND

Scissor lifts commonly include a vertically movable platform that is supported by a foldable series of linked supports. The linked supports are arranged in an "X" pattern, crisscrossing with one another. A hydraulic cylinder generally controls vertical movement of the platform by engaging and rotating (i.e., unfolding) the lowermost set of linked supports, which in turn unfolds the remainder of the series of linked supports within the system. The platform raises and lowers based upon the degree of actuation by the hydraulic cylinder. A hydraulic cylinder may also control various other vehicle actions, such as, for example, steering or platform tilt functions. Scissor lifts using one or more hydraulic cylinders require an on-board reservoir tank to store hydraulic fluid for the lifting process.

US 3 817 346 A discloses a mobile scaffolding which is powered by self-contained electrical storage batteries. The electric drive is mechanically linked to the lift mechanism of the scaffolding by mechanical means comprising screw means and a mating nut means interconnected by rolling means to provide a coupling. The lift mechanism employs compact spring means biased to extend the lift mechanism from its contracted position to provide a force that supplements the electric drive when the mechanism has the most unfavorable lever moment for extension of the scaffolding. The unit has a self-contained power means for mobility and a self-contained directional control means with remote control means whereby the entire unit can be controlled from the scaffolding platform with a single lever that actuates the lift, drive and steering motors.

WO 2015/134482 A1 discloses a system and method of controlling a scissors lift vehicle are provided. The system includes a main computer including one or more processors and one or more memory devices communicatively coupled to the one or more processors, a steer controller configured to receive commands from the main computer to control a plurality of independently steerable wheel assemblies, each wheel assembly including a steer angle sensor, a steer angle actuator, and a drive motor, and a scissors lift controller configured to control a hydraulic piston assembly including a hydraulic fluid reservoir internal to a piston rod assembly. The system also includes a tilt sensor configured to determine an angle of incline of the scissors lift vehicle, a variable-speed steer actuator configured to rotate a wheel assembly about the steer axis of rotation at a selectable rate, and a wheel including a respective drive axis of rotation.

JP 2003 226492 A discloses a vehicle for work at heights having a control device for selecting a first mode to set a workbench in a horizontal state relative to a vehicle body and a second mode to set the workbench in the horizontal state relative to a horizontal surface on the ground by the switching operation. In the first mode, an actuator is operated based on the result of detection of a first angle sensor for detecting the angle θ1 of a boom to the vehicle body and a second angle sensor for detecting the angle θ2 of the workbench relative to a boom, so that the workbench is controlled to be in the horizontal state. In the second mode, the actuator is operated based on the result of detection of an inclination sensor for detecting the horizontal angle difference θ of the workbench to the horizontal surface on the ground to control the workbench to be horizontal.

### SUMMARY

One exemplary embodiment relates to a fully-electric scissor lift. The fully- electric scissor lift comprises a base, a scissor lift mechanism, a work platform, a linear actuator, and a battery. The base has a plurality of wheels. The scissor lift mechanism has a first end coupled to the base and is moveable between an extended position and a retracted position. The scissor lift mechanism comprises a foldable series of linked support members. The work platform is configured to support a load. The work platform is coupled to and supported by a second end of the scissor lift mechanism. The linear actuator is configured to selectively move the scissor lift mechanism between the extended position and the retracted position. The linear actuator has an electric lift motor. The linear actuator includes a push tube assembly including a protective outer tube and a push tube. The protective outer tube has a trunnion connection portion rotatably coupling the protective outer tube to one support member of the foldable series of linked support members. The push tube has a connection end rotatably coupling the push tube to another support member of the foldable series of linked support members. The battery is configured to apply power to the electric lift motor.

### BRIEF DESCRIPTION OF THE FIGURES

The disclosure will become more fully understood from the following detailed description, taken in conjunction with the accompanying figures, wherein like reference numerals refer to like elements, in which:
FIG. 1A is a side perspective view of a fully-electric scissor lift, according to an exemplary embodiment;
FIG. 1B is another side perspective view of the fully-electric scissor lift of FIG. 1A;
FIG. 2A is a side view of the fully-electric scissor lift of FIG. 1A, shown in a retracted or stowed position;
FIG. 2B is a side perspective view of the fully-electric scissor lift of FIG. 1A, shown in an extended or work position;
FIG. 3 is a side view of a linear actuator of the fully-electric scissor lift of FIG. 1A;
FIG. 4 is a side view of a push tube and a nut assembly of the linear actuator of FIG. 3;
FIG. 5 is a bottom perspective view of a steering system of the fully-electric scissor lift of FIG. 1B;
FIG. 6 is a top perspective view of the steering system of FIG. 5, shown in isolation;
FIG. 7 is a top view of the steering system of FIG. 5, shown in isolation;
FIG. 8 is a rear view of the fully-electric scissor lift of FIG. 1A, depicting various vehicle controllers; and
FIG. 9 is a side perspective view of another fully-electric scissor lift in the form of a boom lift, according to another exemplary embodiment.

### DETAILED DESCRIPTION

Before turning to the figures, which illustrate the exemplary embodiments in detail, it should be understood that the present application is not limited to the details or methodology set forth in the description or illustrated in the figures. It should also be understood that the terminology is for the purpose of description only and should not be regarded as limiting.

Referring to the figures generally, the various exemplary embodiments disclosed herein relate to systems, apparatuses, and methods for a fully-electric scissor lift. The scissor lift incorporates several electrically-actuated systems to control various functions of the scissor lift. For example, in some embodiments, the scissor lift may incorporate an electrically-actuated steering system and/or an electrically-actuated lift system. Accordingly, in the embodiments incorporating these electrically-actuated systems, leak-prone hydraulic systems can be entirely eliminated from the scissor lift. That is, the fully-electric scissor lift may function without the inclusion of high-pressure, leak-prone hydraulic tanks, hydraulic lines, and hydraulic fluid generally. Thus, the fully-electric scissor lift may allow for reduced maintenance and upkeep as compared to traditional hydraulic scissor lifts.

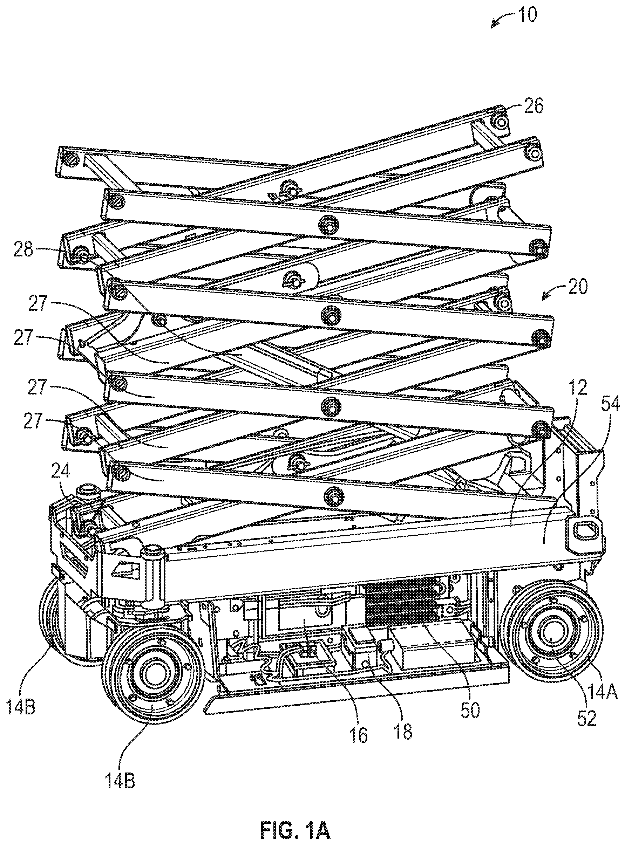

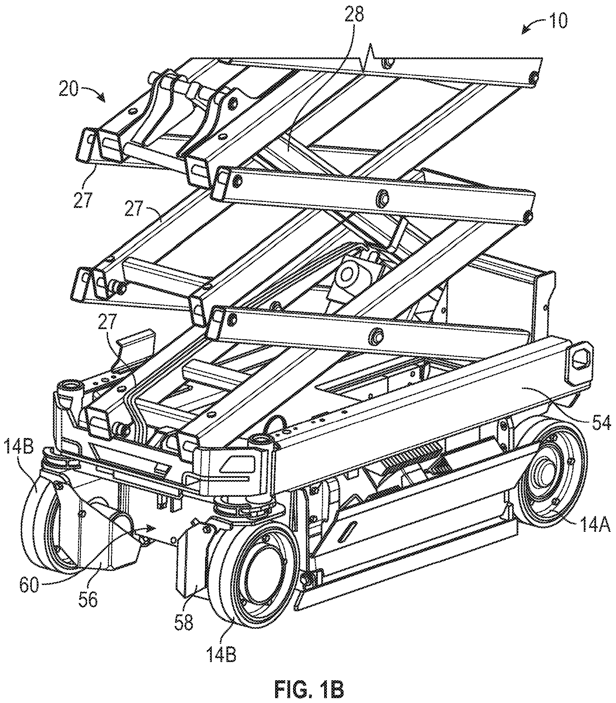

According to the exemplary embodiment depicted in FIGS. 1A and 1B, a vehicle, shown as vehicle 10, is illustrated. In some embodiments, the vehicle 10 may be fully-electric scissor lift, for example, which can be used to perform a variety of different tasks at various elevations. The vehicle 10 includes a base 12 supported by wheels 14A, 14B positioned about the base 12. The vehicle 10 further includes a battery 16 positioned on board the base 12 of the vehicle 10 to supply electrical power to various operating systems present on the vehicle 10.

The battery 16 can be a rechargeable lithium-ion battery, for example, which is capable of supplying a direct current (DC) or alternating current (AC) to vehicle 10 controls, motors, actuators, and the like. The battery 16 can include at least one input 18 capable of receiving electrical current to recharge the battery 16. In some embodiments, the input 18 is a port capable of receiving a plug in electrical communication with an external power source, like a wall outlet. The battery 16 can be configured to receive and store electrical current from one of a traditional 120 V outlet, a 240 V outlet, a 480 V outlet, an electrical power generator, or another suitable electrical power source.

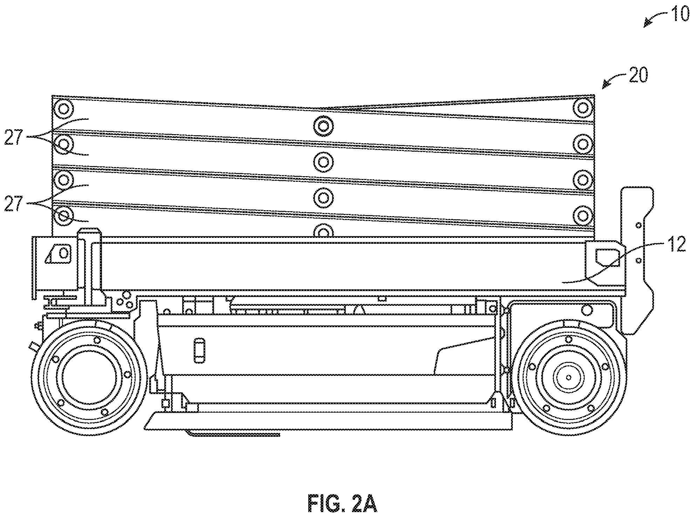

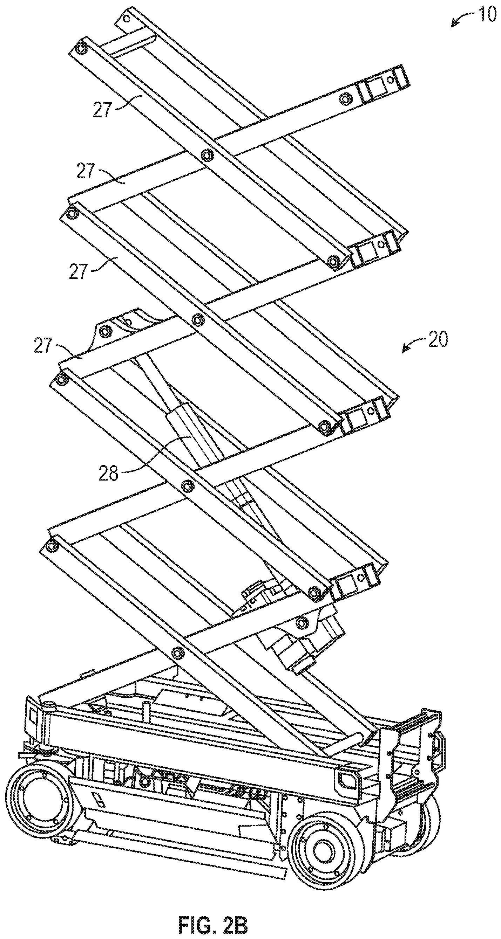

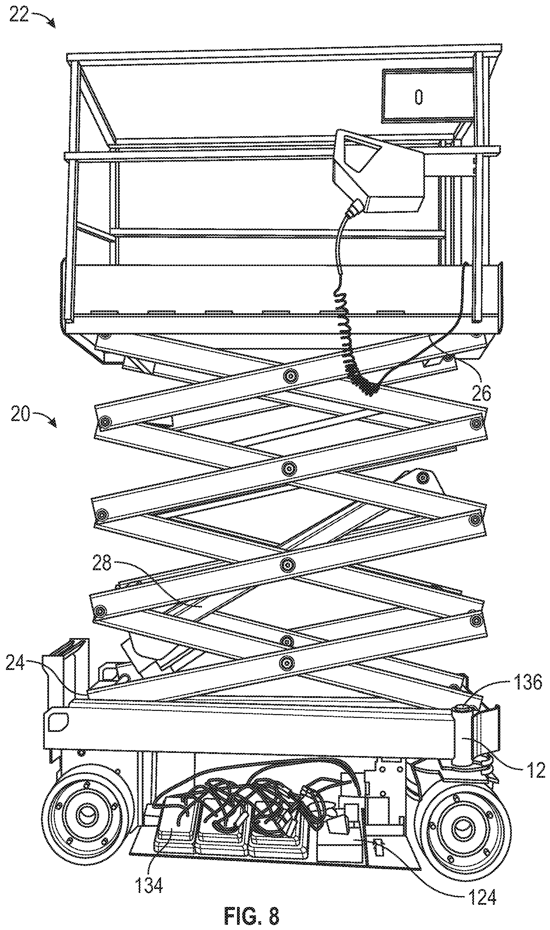

The vehicle 10 further includes a retractable lift mechanism, shown as a scissor lift mechanism 20, coupled to the base 12. The scissor lift mechanism 20 supports a work platform 22 (shown in FIG. 8). As depicted, a first end 24 of the scissor lift mechanism 20 is anchored to the base 12, while a second end 26 of the scissor lift mechanism 20 supports the work platform 22. As illustrated, the scissor lift mechanism 20 is formed of a foldable series of linked support members 27. The scissor lift mechanism 20 is selectively movable between a retracted or stowed position (shown in FIG. 2A) and a deployed or work position (shown in FIG. 2B) using an actuator, shown as linear actuator 28. The linear actuator 28 is an electric actuator. The linear actuator 28 controls the orientation of the scissor lift mechanism 20 by selectively applying force to the scissor lift mechanism 20. When a sufficient force is applied to the scissor lift mechanism 20 by the linear actuator 28, the scissor lift mechanism 20 unfolds or otherwise deploys from the stowed, retracted position into the deployed, work position. Because the work platform 22 is coupled to the scissor lift mechanism 20, the work platform 22 is also raised away from the base 12 in response to the deployment of the scissor lift mechanism 20.

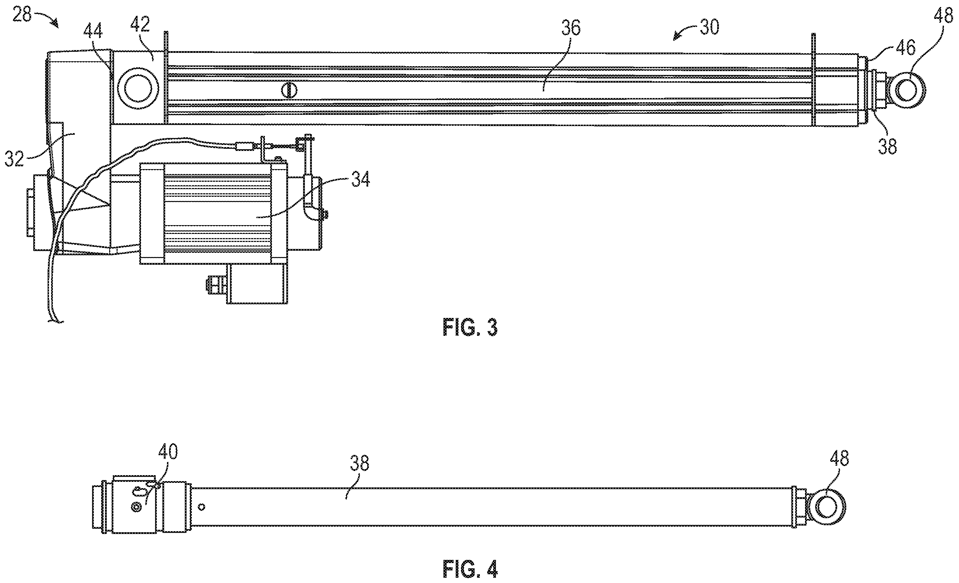

As illustrated in the exemplary embodiment provided in FIGS. 3 and 4, the linear actuator 28 includes a push tube assembly 30, a gear box 32, and an electric lift motor 34. The push tube assembly 30 includes a protective outer tube 36 (shown in FIG. 3), a push tube 38, and a nut assembly 40 (shown in FIG. 4). The protective outer tube 36 has a trunnion connection portion 42 disposed at a proximal end 44 thereof. The trunnion connection portion 42 is rigidly coupled to the gear box 32, thereby rigidly coupling the protective outer tube 36 to the gear box 32. The trunnion connection portion 42 is further configured to rotatably couple the protective outer tube 36 to one of the support members 27 (as shown in FIG. 2B).

The protective outer tube 36 further includes an opening at a distal end 46 thereof. The opening of the protective outer tube 36 is configured to slidably receive the push tube 38. The push tube 38 includes a connection end 48 configured to rotatably couple the push tube 38 to another one of the support members 27 (as shown in FIG. 2B). As will be discussed below, the push tube 38 is slidably movable and selectively actuatable between an extended position (shown in FIG. 2B) and a retracted position (shown in FIG. 3). The connection end 48 of the push tube 38 may similarly provide a trunnion-type connection between the push tube 38 and the support member 27.

Referring now to FIG. 4, the push tube 38 is rigidly coupled to the nut assembly 40, such that motion of the nut assembly 40 results in motion of the push tube 38. The push tube 38 and the nut assembly 40 envelop a central screw rod. The central screw rod is rotatably engaged with the gear box 32 and is configured to rotate within the push tube 38 and the nut assembly 40, about a central axis of the push tube assembly 30. The nut assembly 40 is configured to engage the central screw rod and translate the rotational motion of the central screw rod into translational motion of the push tube 38 and the nut assembly 40, with respect to the central screw rod, along the central axis of the push tube assembly 30. In some embodiments, the nut assembly 40 may be, for example, a ball screw assembly or a roller screw assembly. In some other embodiments, the nut assembly 40 may be any other suitable assembly for translating rotational motion of the central screw rod into translational motion of the push tube 38 and the nut assembly 40.

Referring again to FIG. 3, the lift motor 34 is configured to selectively provide rotational actuation to the gear box 32. The rotational actuation from the lift motor 34 is then translated through the gear box 32 to selectively rotate the central screw rod of the push tube assembly 30. The rotation of the central screw rod is then translated by the nut assembly 40 to selectively translate the push tube 38 and the nut assembly 40 along the central axis of the push tube assembly 30. Accordingly, the lift motor 34 is configured to selectively actuate the push tube 38 between the extended position and the retracted position. Thus, with the trunnion connection portion 42 of the protective outer tube 36 and the connection end 48 of the push tube 38 each rotatably coupled to their respective support members 27, the lift motor 34 is configured to selectively move the scissor lift mechanism 20 to various heights between and including the retracted or stowed position and the deployed or work position.

The lift motor 34 may be an AC motor (e.g., synchronous, asynchronous, etc.) or a DC motor (shunt, permanent magnet, series, etc.). In some instances, the lift motor 34 is in communication with and powered by the battery 16. In some other instances, the lift motor 34 may receive electrical power from another electricity source on board the vehicle 10.

Referring again to FIGS. 1A and 1B, the battery 16 can also supply electrical power to a drive motor 50 to propel the vehicle 10. The drive motor 50 may similarly be an AC motor (e.g., synchronous, asynchronous, etc.) or a DC motor (shunt, permanent magnet, series, etc.) for example, which receives electrical power from the battery 16 or another electricity source on board the vehicle 10 and converts the electrical power into rotational energy in a drive shaft. The drive shaft can be used to drive the wheels 14A, 14B of the vehicle 10 using a transmission. The transmission can receive torque from the drive shaft and subsequently transmit the received torque to a rear axle 52 of the vehicle 10. This torque rotates the rear axle 52, providing rotational motion to the rear wheels 14A and propelling the vehicle 10. In some embodiments, the drive motor 50 may be in communication with a controller. The controller may be configured to receive input commands from a user during operation. In some embodiments, the controller may be configured to limit the drive speed of the vehicle 10 based on a height of the work platform 22.

The rear wheels 14A of the vehicle 10 can be used to drive the vehicle 10, while the front wheels 14B can be used to steer the vehicle 10. In some embodiments, the rear wheels 14A are rigidly coupled to the rear axle 52, and are held in a constant orientation relative to the base 12 of the vehicle 10 (e.g., approximately aligned with an outer perimeter 54 of the vehicle 10). In contrast, the front wheels 14B are pivotally coupled to the base 12 of the vehicle 10. The front wheels 14B can be coupled to vertical suspension posts 56, 58 that are mounted to a front of the base 12. The wheels 14B can be rotated relative to the base 12 about the vertical suspension posts 56, 58 to adjust a direction of travel for the vehicle 10.

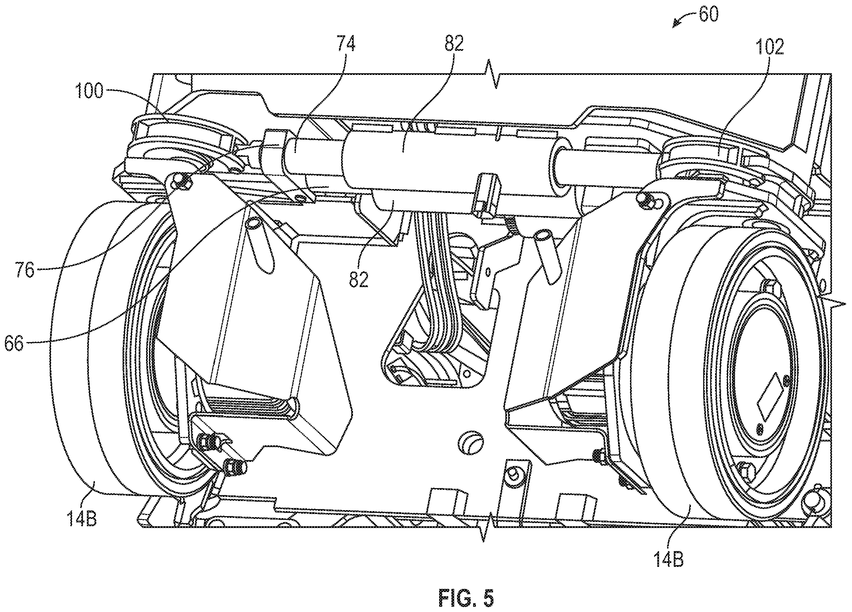

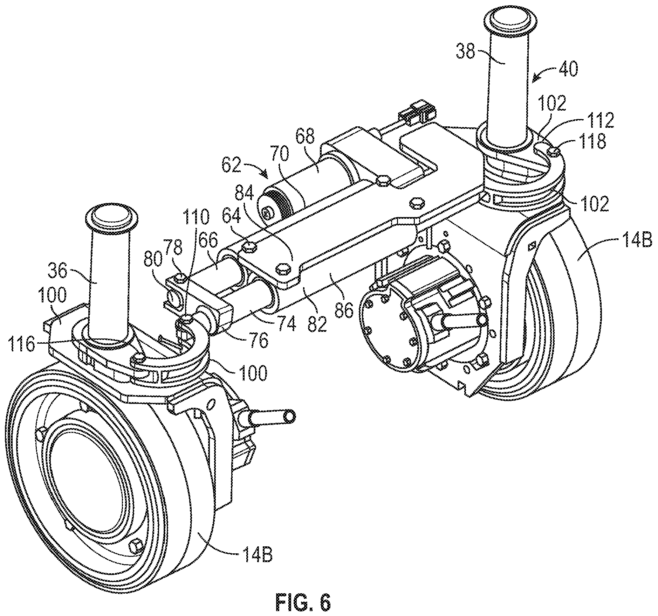

The front wheels 14B can be oriented using a steering system 60, as depicted in additional detail in FIGS. 5-7. The steering system 60 is an actively adjustable system that similarly operates using an electrically-powered linear actuator 62 in lieu of a hydraulic cylinder. The steering system 60 can be mounted to the underside of the base 12 of the vehicle 10, for example, and mechanically coupled to each of the two front wheels 14B (e.g., using fasteners 64). In some embodiments, the steering system 60 is completely contained within the outer perimeter 54 of the base 12 of the vehicle 10. Accordingly, the linear actuator 62 can be moved to various different positions to orient the front wheels 14B of the vehicle 10 in a desired direction of vehicle 10 travel.

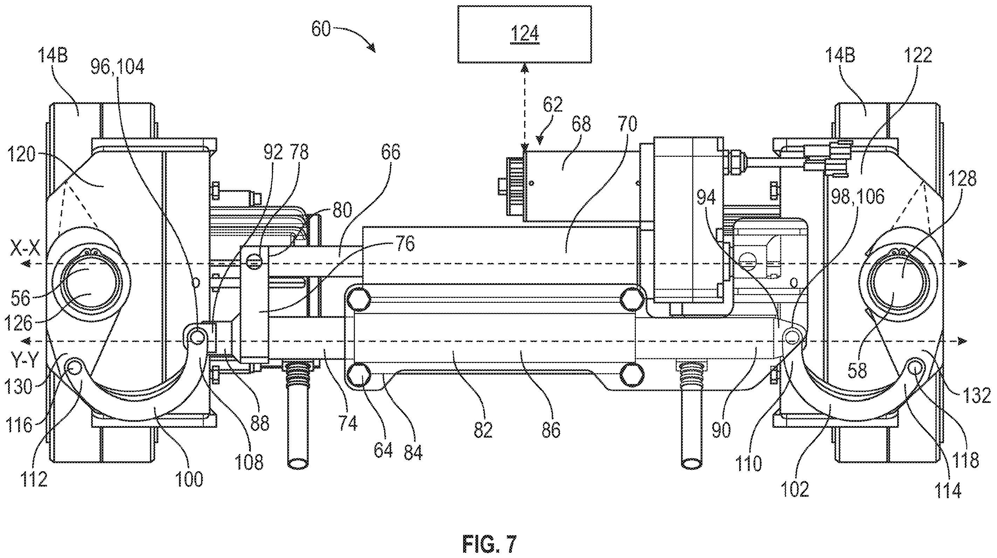

The linear actuator 62 includes a piston 66 movable about an axis X-X (shown in FIG. 7) using a motor 68. The motor 68 can be received within a housing 70 that is coupled to an underside of the base 12 of the vehicle 10. Like the motors 34, 50, the motor 68 of the linear actuator 62 may be supplied with electrical power from the battery 16. The motor 68 rotates a drive shaft contained within housing 70, which in turn drives a belt or gear(s). The belt or gear can be used to transmit torque from the drive shaft to a lead screw, which rotates. Rotational motion of the lead screw drives a lead screw nut coupled to the piston 66, which translates linearly about the lead screw, along the axis X-X, as the lead screw rotates. As such, the piston 66 can move into or out of the housing 70.

The linear actuator 62 is coupled to a drag link 74 that moves in concert with the piston 66 of the linear actuator 62. The drag link 74 can be an elongate bar or tube, for example, that is mounted to the piston 66 using a linkage 76. The linkage 76 can be pivotally coupled to the piston 66 and rigidly mounted to the drag link 74. In some embodiments, the linkage 76 is welded to the drag link 74 and pin-mounted to the piston 66. A pin 78 can extend through both the linkage 76 and a distal end 80 of the piston 66 to secure the linkage 76 to the piston 66.

The allowable motion of the drag link 74 can be governed by the piston 66 of the linear actuator 62 along with a bearing housing 82. The bearing housing 82 can include a mounting flange 84 and a sleeve 86 extending away from the mounting flange 84. The mounting flange 84 can include a flat surface designed to sit flush upon the underside of the base 12. The mounting sleeve 86 can define a cylindrical passage through the bearing housing 82 that can receive the drag link 74.

In some embodiments, the cylindrical passage is designed to form a clearance fit with the drag link 74. The bearing housing 82 can include one or more bearings to help promote sliding movement of the drag link 74 through the sleeve 86. Alternatively, the mounting sleeve 86 of the bearing housing 82 can include a lubricant (e.g., oil) to help promote sliding motion between the drag link 74 and the mounting sleeve 86. One or more seals can be positioned between the drag link 74 and the bearing housing 82 to avoid lubricant leaking. In some embodiments, the drag link 74 and mounting sleeve 86 are arranged so that the drag link 74 translates along a second axis Y-Y (shown in FIG. 7), which can be parallel to the axis X-X. The drag link 74 and mounting sleeve 86 can be approximately centered between the front wheels 14B of the vehicle 10.

Each end 88, 90 of the drag link 74 can include a mounting tab 92, 94. The mounting tabs 92, 94 can each provide a generally flat surface surrounding a through hole 96, 98. The through hole 96, 98 is adapted to receive a fastener or pin, for example, which can join the drag link 74 to additional components. The mounting tabs 92, 94 can be formed integrally with the drag link 74 or otherwise rigidly mounted to the drag link 74. In some embodiments, the mounting tabs 92, 94 are welded to each end 88, 90 of the drag link 74. Alternatively, through holes can be formed in the drag link 74 near each end 88, 90 of the drag link 74, and mounting tabs 92, 94 can be omitted.

As depicted in FIGS. 5-7, the mounting tabs 92, 94 of the drag link 74 can each support a tie rod 100, 102. A first tie rod 100 is pivotally mounted to the mounting tab 92 on the first end 88 of the drag link 74, while a second tie rod 102 is pivotally mounted to the mounting tab 94 on the second end 90 of the drag link 74. Pins 104, 106 can be used to rotatably mount a first end 108, 110 of each of the tie rods 100, 102 to a corresponding end 88, 90 of the drag link 74. The tie rods 100, 102 can each be suspended below the base 12 of the vehicle 10.

The second, opposite end 112, 114 of each tie rod 100, 102 can be coupled to one of the front wheels 14B of the vehicle 10. Like the first end 108, 110, the second end 112, 114 of the tie rod 100, 102 can also receive a pin 116, 118 to couple the tie rods 100, 102 to the front wheels 14B. The pin coupling securely links the tie rod 100, 102 to the wheel 14B, while allowing some limited rotatable motion between the front wheel 14B and the tie rod 100, 102 it is mounted to. In some embodiments, the wheels 14B are coupled to the tie rods 100, 102 using wheel knuckles 120, 122. The wheel knuckles 120, 122 each support a front wheel 14B and are rotatably mounted to the base 12 of the vehicle 10. The orientation of the wheel knuckles 120, 122 controls the orientation of the front wheels 14B and, consequently, the steering of the vehicle 10.

The tie rods 100, 102 can have an arcuate shape designed to handle tensile loading. For example, each tie rod 100, 102 can be defined by a rigid, arcing member extending angularly between about 135 and 215 degrees. As best depicted in FIG. 7, each tie rod 100, 102 is defined by an arc extending approximately 180 degrees between the first end 108, 110 and the second end 112, 114. The arc can be defined by a constant radius or, alternatively, a variable radius. Similarly, the tie rods 100, 102 can be defined by a uniform thickness throughout, or can vary. For example, the thickness of the tie rods 100, 102 can increase as the distance away from each of the ends 108, 110, 112, 114 increases (e.g., a point of maximum material thickness occurs near the center of each tie rod 100, 102). In some embodiments, the tie rods 100, 102 have identical sizes.

The orientation of the front wheels 14B and the steering of the vehicle 10, more broadly, can be controlled using the steering mechanism 60. As depicted in FIGS. 5-7, the mechanical linkage formed between the linear actuator 62, the drag link 74, the tie bars 100, 102, and the wheel knuckles 120, 122 creates an Ackerman geometry steering system 60 that is controlled by the linear actuator 62. Specifically, the position of the piston 66 determines the orientation of the front wheels 14B of the vehicle 10.

The linear actuator 62 of the steering system 60 is in electrical communication with both the battery 16 and a vehicle controller 124 configured to receive and execute steering commands. In some embodiments, the linear actuator 62 is hardwired to both the battery 16 and the vehicle controller 124. In some other embodiments, the linear actuator 62 may be in wireless communication (e.g., Bluetooth, internet, cloud-based communication system, etc.). When the vehicle controller 124 receives a steering command (e.g., a desired steering orientation from a user through a steering wheel or joystick), the vehicle controller 124 can first determine the current orientation of the front wheels 14B. The current orientation of the front wheels 14B is determined by detecting (e.g., using a sensor or encoder) or otherwise knowing the current position of the piston 66 of the linear actuator 62. If the desired steering orientation does not match the current orientation of the front wheels 14B, the vehicle controller 124 can issue a command to the motor 68 of the linear actuator 62 to either retract or further advance the piston 66 relative to the housing 70. In some other embodiments, the steering system 60 and vehicle controller 124 respond to a command from a user (e.g., through a steering wheel or joystick) by adjusting the linear actuator 62 without using or needing current front wheel 14B orientation information.

The rotatable coupling formed between the wheel knuckles 120, 122, the tie rods 100, 102, and the drag link 74 rotates the front wheels 14B in response to lateral movement by the drag link 74. As shown in FIG. 7, the second end 112, 114 of each tie rod 100, 102 is eccentrically coupled to a wheel knuckle 120, 122, offset from a rotation point 126, 128 for the wheel knuckle 120, 122. The tie rods 100, 102 can be pivotally coupled to a flange 130, 132 of the wheel knuckle 120, 122 that extends forward from the rotation point 126, 128 (when the front wheels 14B are oriented straight forward).

Due to the eccentric mounting of the tie rods 100, 102 to the flanges 130, 132, movement of the drag link 74 creates a torque on each wheel knuckle 120, 122 sufficient to rotate the wheel knuckles 120, 122 about their respective rotation points 126, 128. Rotation of the wheel knuckle 120, 122 about the rotation points 126, 128 rotates the front wheels 14B about the vertical suspension posts 56, 58, and changes the steering orientation of the vehicle 10. Since the rear wheels 14A are fixed in a forward-aligned orientation relative to the base 12 of the vehicle 10, rotating the front wheels 14B causes the vehicle 10 to turn in the direction the front wheels 14B are pointed.

In some embodiments, the steering system 60 can be alternatively incorporated into the rear wheels 14A of the vehicle 10, rather than the front wheels 14B. In some other embodiments, a steering system similar to the steering system 60 may be incorporated into both the front wheels 14B and the rear wheels 14A to provide additional vehicle movement capabilities, as desired for a given application.

As shown in FIG. 8, the vehicle controller 124 is in further communication with a lift motor controller 134. The lift motor controller 134 is in communication with the linear actuator 28 (e.g., the lift motor 34) to control the movement of the scissor lift mechanism 20. Communication between the lift motor controller 134 and the linear actuator 28 and/or between the vehicle controller 124 and the lift motor controller 134 can be provided through a hardwired connection, or through a wireless connection (e.g., Bluetooth, Internet, cloud-based communication system, etc.). It should be understood that each of the vehicle controller 27 and the lift controller 28 includes various processing and memory components configured to perform the various activities and methods described herein. For example, in some instances, each of the vehicle controller 27 and the lift controller 28 includes a processing circuit having a processor and a memory. The memory is configured to store various instructions configured to, when executed by the processor, cause the vehicle 10 to perform the various activities and methods described herein.

In some embodiments, the vehicle controller 124 may be configured to limit the drive speed of the vehicle 10 depending on a height of the work platform 22. That is, the lift motor controller 134 may be in communication with a support member angle sensor, such as scissor angle sensor 136 (shown in FIG. 8), configured to monitor a lift angle of the bottom-most support member 27 with respect to the base 12. Based on the lift angle and the configuration of the scissor lift mechanism 20, the lift controller 134 may determine the current height of the work platform 22. Using this height, the vehicle controller 124 may be configured to limit or proportionally reduce the drive speed of the vehicle 10 as the work platform 22 is raised.

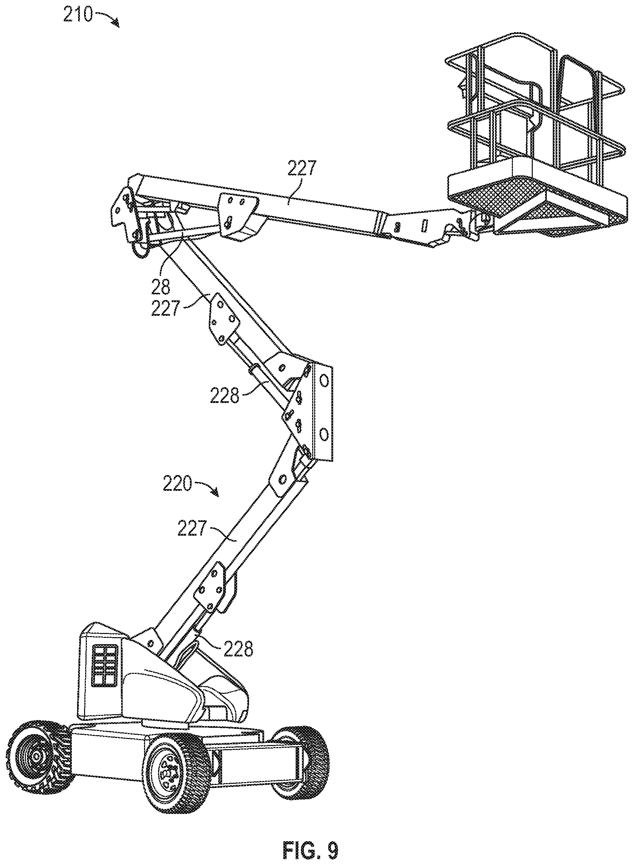

It should be appreciated that, while the retractable lift mechanism included on vehicle 10 is a scissor lift mechanism, in some instances, a vehicle may be provided that alternatively includes a retractable lift mechanism in the form of a boom lift mechanism. For example, in the exemplary embodiment depicted in FIG. 9, a vehicle, shown as vehicle 210, is illustrated. The vehicle 210 includes a retractable lift mechanism, shown as boom lift mechanism 220. The boom lift mechanism 220 is similarly formed of a foldable series of linked support members 227. The boom lift mechanism 220 is selectively movable between a retracted or stowed position and a deployed or work position using a plurality of actuators 228. Each of the plurality of actuators 228 is similarly an electric actuator.

It should be further appreciated that the electric actuators used in the lift mechanisms 20, 220, as well as in the steering system 60, may be incorporated into nearly any type of electric vehicle. For example, the electric systems described herein can be incorporated into, for example, a scissor lift, an articulated boom, a telescopic boom, or any other type of aerial work platform vehicle.

Advantageously, vehicles 10, 210 are fully-electric lift devices. All of the electric actuators and electric motors of vehicles 10, 210 can be configured to perform their respective operations without requiring any hydraulic systems, hydraulic reservoir tanks, hydraulic fluids, engine systems, etc. That is, both vehicles 10, 210 are completely devoid of any hydraulic systems and/or hydraulic fluids generally. Said differently, both vehicles 10, 210 are devoid of any moving fluids. Traditional lift devices do not use a fully-electric system and require regular maintenance to ensure that the various hydraulic systems are operating properly. As such, the vehicles 10, 210 use electric motors and electric actuators, which allows for the absence of combustible fuels (e.g., gasoline, diesel) and/or hydraulic fluids. The vehicles 10, 210 are powered by batteries, such as battery 16, that can be re-charged when necessary.

Although this description may discuss a specific order of method steps, the order of the steps may differ from what is outlined. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

As utilized herein, the terms "approximately", "about", "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like, as used herein, mean the joining of two members directly or indirectly to one another. Such joining may be stationary (e.g., permanent, etc.) or moveable (e.g., removable, releasable, etc.). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," "between," etc.) are merely used to describe the orientation of various elements in the figures. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, or state machine. A processor also may be implemented as a combination of computing devices, such as a combination of a DSP and a microprocessor, a plurality of microprocessors, one or more microprocessors in conjunction with a DSP core, or any other such configuration. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is coupled to the processor to form a processing circuit and includes computer code for executing (e.g., by the processor) the one or more processes described herein.

## Claims

1. A fully-electric scissor lift (10) comprising:
a base (12) having a plurality of wheels (14A, 14B);
a scissor lift mechanism (20) having a first end (24) coupled to the base (12) and being moveable between an extended position and a retracted position, the scissor lift mechanism (20) comprising a foldable series of linked support members (27);
a work platform (22) configured to support a load, the work platform (22) being coupled to and supported by a second end (26) of the scissor lift mechanism (20);
a linear actuator (28) configured to selectively move the scissor lift mechanism (20) between the extended position and the retracted position, the linear actuator (28) having an electric lift motor (34), the linear actuator (28) including a push tube assembly (30) including a protective outer tube (36) and a push tube (38), the protective outer tube (36) having a trunnion connection portion (42) rotatably coupling the protective outer tube (36) to one support member of the foldable series of linked support members (27), the push tube (38) having a connection end (48) rotatably coupling the push tube (38) to another support member of the foldable series of linked support members (27); and
a battery (16) configured to apply power to the electric lift motor (34).

2. The fully-electric scissor lift (10) of claim 1, further comprising:
an electric drive motor (50) configured to rotate at least one wheel of the plurality of wheels (14A, 14B) to propel the fully-electric scissor lift (10); and
an electrically-actuated steering system (60) operably coupled to at least one of the plurality of wheels (14A, 14B) to steer the fully-electric scissor lift (10);
wherein the battery (16) is further configured to apply power to the electric drive motor (50) and the electrically-actuated steering system (60).

3. The fully-electric scissor lift (10) of claim 2, wherein the scissor lift mechanism (20) further comprises a support member angle sensor (136) configured to monitor a lift angle of at least one support member of the foldable series of linked support members (27), the fully-electric scissor lift (10) further comprising:
a vehicle controller (124) in communication with the support member angle sensor (136) and the electric drive motor (50), the vehicle controller (124) configured to determine a height of the work platform (22) using the lift angle and to limit a drive speed of the fully-electric scissor lift (10) based on the height of the work platform (22).

4. The fully-electric scissor lift (10) of claim 1, further comprising:
an electric drive motor (50) configured to rotate at least one wheel of the plurality of wheels (14A, 14B) to propel the fully-electric scissor lift (10); and
an electrically-actuated steering system (60) operably coupled to at least one of the plurality of wheels (14A, 14B) to steer the fully-electric scissor lift (10);
wherein the battery (16) is further configured to apply power to the electric drive motor (50) and the electrically-actuated steering system (60).

5. The fully-electric scissor lift (10) of claim 4, further comprising a support member angle sensor (136) and a vehicle controller (124), the support member angle sensor (136) configured to monitor a lift angle of at least one support member of the foldable series of linked support members (27), the vehicle controller (124) in communication with the support member angle sensor (136) and configured to determine a height of the work platform (22) using the lift angle.

6. The fully-electric scissor lift (10) of claim 5, wherein the vehicle controller (124) is further in communication with the electric drive motor (50) and is configured to limit a drive speed of the fully-electric scissor lift (10) based on the height of the work platform (22).

7. The fully-electric scissor lift (10) of claim 6, wherein the plurality of wheels (14A, 14B) includes two front wheels (14B) and two rear wheels (14A), and the electrically-actuated steering system (60) extends between the two front wheels (14B).

8. The fully-electric scissor lift (10) of claim 7, wherein the electrically-actuated steering system (60) comprises:
a first knuckle (120) and a second knuckle (122) each coupled to one of the two front wheels (14B);
a first tie rod (100) having a first end pivotally coupled to the first knuckle (120) and a second end pivotally coupled to a drag link (74);
a second tie rod (102) having a first end pivotally coupled to the second knuckle (122) and a second end pivotally coupled to the drag link (74); and
an electrical linear actuator (62) coupled to the drag link (74) and configured to adjust an orientation of the two front wheels (14B) relative to the base (12).

9. The fully-electric scissor lift (10) of claim 8, wherein movement of the electrical linear actuator (62) along a first axis translates the drag link (74) along a second axis parallel to the first axis, and wherein movement of the drag link (74) along the second axis pivots the first tie rod (100) relative to the first knuckle (120) and pivots the second tie rod (102) relative to the second knuckle (122), and wherein pivoting the first tie rod (100) relative to the first knuckle (120) and pivoting the second tie rod (102) relative to the second knuckle (122) adjusts the orientation of the two front wheels (14B) relative to the base (12).

10. The fully-electric scissor lift (10) of claim 1, further comprising:
an electric drive motor (50) configured to rotate at least one wheel of the plurality of wheels (14A, 14B) to propel the fully-electric scissor lift (10),
wherein the battery (16) is further configured to apply power to the electric drive motor (50).

11. The fully-electric scissor lift (10) of claim 10, further comprising an electrically-actuated steering system (60) operably coupled to at least one of the plurality of wheels (14A, 14B) to steer the fully-electric scissor lift (10).

12. The fully-electric scissor lift (10) of claim 11, wherein the battery (16) is further configured to apply power to the electrically-actuated steering system (60).

13. The fully-electric scissor lift (10) of claim 10, further comprising a support member angle sensor (136) and a vehicle controller (124), the support member angle sensor (136) configured to monitor a lift angle of at least one support member of the foldable series of linked support members (27), the vehicle controller (124) in communication with the support member angle sensor (136) and configured to determine a height of the work platform (22) using the lift angle.

14. The fully-electric scissor lift (10) of claim 13, wherein the vehicle controller (124) is further in communication with the electric drive motor (50) and is configured to limit a drive speed of the fully-electric scissor lift (10) based on the height of the work platform (22).

## Patentansprüche

1. Vollelektrische Scherenhebebühne (10) umfassend:
eine Basis (12) mit einer Vielzahl von Rädern (14A, 14B);
einen Scherenhebemechanismus (20) mit einem ersten Ende (24), das mit der Basis (12) verbunden ist und zwischen einer ausgefahrenen Position und einer eingefahrenen Position beweglich ist, wobei der Scherenhebemechanismus (20) eine faltbare Reihe verbundener Stützelemente (27) umfasst;
eine Arbeitsplattform (22), die zum Tragen einer Last konfiguriert ist, wobei die Arbeitsplattform (22) mit einem zweiten Ende (26) des Scherenhebemechanismus (20) verbunden ist und von diesem getragen wird;
einen Linearantrieb (28), der dazu konfiguriert ist, den Scherenhubmechanismus (20) selektiv zwischen der ausgefahrenen Position und der eingefahrenen Position zu bewegen, wobei der Linearantrieb (28) einen elektrischen Hubmotor (34) aufweist, wobei der Linearantrieb (28) eine Schubrohranordnung (30) umfasst, die ein schützendes Außenrohr (36) und ein Schubrohr (38) umfasst, wobei das schützende Außenrohr (36) einen Zapfenverbindungsabschnitt (42) aufweist, der das schützende Außenrohr (36) drehbar mit einem Stützelement der faltbaren Reihe von verbundenen Stützelementen (27) verbindet, wobei das Schubrohr (38) ein Verbindungsende (48) aufweist, das das Schubrohr (38) drehbar mit einem anderen Stützelement der faltbaren Reihe von verbundenen Stützelementen (27) verbindet; und
eine Batterie (16), die dazu konfiguriert ist, den elektrischen Hubmotor (34) mit Strom zu versorgen.

2. Vollelektrische Scherenhebebühne (10) nach Anspruch 1, ferner umfassend:
einen elektrischen Antriebsmotor (50), der so konfiguriert ist, dass er mindestens ein Rad der Vielzahl von Rädern (14A, 14B) dreht, um die vollelektrische Scherenhebebühne (10) anzutreiben; und
ein elektrisch betätigtes Lenksystem (60), das betriebsmäßig mit mindestens einem der Vielzahl von Rädern (14A, 14B) gekoppelt ist, um die vollelektrische Scherenhebebühne (10) zu lenken;
wobei die Batterie (16) weiterhin so konfiguriert ist, dass sie den elektrischen Antriebsmotor (50) und das elektrisch betätigte Lenksystem (60) mit Strom versorgt.

3. Vollelektrische Scherenhebebühne (10) nach Anspruch 2, wobei der Scherenhebemechanismus (20) ferner einen Stützelementwinkelsensor (136) umfasst, der dazu konfiguriert ist, einen Hubwinkel von mindestens einem Stützelement der faltbaren Reihe verbundener Stützelemente (27) zu überwachen, wobei die vollelektrische Scherenhebebühne (10) ferner Folgendes umfasst:
eine Fahrzeugsteuerung (124), die mit dem Stützelementwinkelsensor (136) und dem elektrischen Antriebsmotor (50) in Verbindung steht, wobei die Fahrzeugsteuerung (124) dazu konfiguriert ist, eine Höhe der Arbeitsplattform (22) unter Verwendung des Hubwinkels zu bestimmen und eine Antriebsgeschwindigkeit der vollelektrischen Scherenhebebühne (10) basierend auf der Höhe der Arbeitsplattform (22) zu begrenzen.

4. Vollelektrische Scherenhebebühne (10) nach Anspruch 1, ferner umfassend:
einen elektrischen Antriebsmotor (50), der so konfiguriert ist, dass er mindestens ein Rad der Vielzahl von Rädern (14A, 14B) dreht, um die vollelektrische Scherenhebebühne (10) anzutreiben; und
ein elektrisch betätigtes Lenksystem (60), das betriebsmäßig mit mindestens einem der Vielzahl von Rädern (14A, 14B) gekoppelt ist, um die vollelektrische Scherenhebebühne (10) zu lenken;
wobei die Batterie (16) ferner so konfiguriert ist, dass sie den elektrischen Antriebsmotor (50) und das elektrisch betätigte Lenksystem (60) mit Strom versorgt.

5. Vollelektrische Scherenhebebühne (10) nach Anspruch 4, ferner umfassend einen Stützelementwinkelsensor (136) und eine Fahrzeugsteuerung (124), wobei der Stützelementwinkelsensor (136) dazu konfiguriert ist, einen Hubwinkel von mindestens einem Stützelement der faltbaren Reihe verbundener Stützelemente (27) zu überwachen, wobei die Fahrzeugsteuerung (124) mit dem Stützelementwinkelsensor (136) in Verbindung steht und dazu konfiguriert ist, eine Höhe der Arbeitsplattform (22) unter Verwendung des Hubwinkels zu bestimmen.

6. Vollelektrische Scherenhebebühne (10) nach Anspruch 5, wobei die Fahrzeugsteuerung (124) ferner mit dem elektrischen Antriebsmotor (50) in Verbindung steht und so konfiguriert ist, dass er eine Antriebsgeschwindigkeit der vollelektrischen Scherenhebebühne (10) basierend auf der Höhe der Arbeitsplattform (22) begrenzt.

7. Vollelektrische Scherenhebebühne (10) nach Anspruch 6, wobei die Vielzahl von Rädern (14A, 14B) zwei Vorderräder (14B) und zwei Hinterräder (14A) umfasst und das elektrisch betätigte Lenksystem (60) zwischen den beiden Vorderrädern (14B) verläuft.

8. Vollelektrische Scherenhebebühne (10) nach Anspruch 7, wobei das elektrisch betätigte Lenksystem (60) Folgendes umfasst:
einen ersten Achsschenkel (120) und einen zweiten Achsschenkel (122), die jeweils mit einem der beiden Vorderräder (14B) verbunden sind;
eine erste Spurstange (100), deren erstes Ende schwenkbar mit dem ersten Achsschenkel (120) verbunden ist und deren zweites Ende schwenkbar mit einer Spurstange (74) verbunden ist;
eine zweite Spurstange (102), deren erstes Ende schwenkbar mit dem zweiten Achsschenkel (122) verbunden ist und deren zweites Ende schwenkbar mit der Spurstange (74) verbunden ist; und
einen elektrischen Linearantrieb (62), der mit der Spurstange (74) verbunden ist und so konfiguriert ist, dass er eine Ausrichtung der beiden Vorderräder (14B) relativ zur Basis (12) einstellt.

9. Vollelektrische Scherenhebebühne (10) nach Anspruch 8, wobei eine Bewegung des elektrischen Linearantriebs (62) entlang einer ersten Achse die Spurstange (74) entlang einer zweiten Achse parallel zur ersten Achse verschiebt, und wobei eine Bewegung der Spurstange (74) entlang der zweiten Achse die erste Spurstange (100) relativ zum ersten Achsschenkel (120) schwenkt und die zweite Spurstange (102) relativ zum zweiten Achsschenkel (122) schwenkt, und wobei ein Schwenken der ersten Spurstange (100) relativ zum ersten Achsschenkel (120) und ein Schwenken der zweiten Spurstange (102) relativ zum zweiten Achsschenkel (122) die Ausrichtung der beiden Vorderräder (14B) relativ zur Basis (12) einstellt.

10. Vollelektrische Scherenhebebühne (10) nach Anspruch 1, ferner umfassend:
einen elektrischen Antriebsmotor (50), der dazu konfiguriert ist, mindestens ein Rad der Vielzahl von Rädern (14A, 14B) zu drehen, um die vollelektrische Scherenhebebühne (10) anzutreiben,
wobei die Batterie (16) ferner dazu konfiguriert ist, den elektrischen Antriebsmotor (50) mit Strom zu versorgen.

11. Vollelektrische Scherenhebebühne (10) nach Anspruch 10, ferner umfassend ein elektrisch betätigtes Lenksystem (60), das betriebsmäßig mit mindestens einem der mehreren Räder (14A, 14B) gekoppelt ist, um die vollelektrische Scherenhebebühne (10) zu lenken.

12. Vollelektrische Scherenhebebühne (10) nach Anspruch 11, wobei die Batterie (16) ferner so konfiguriert ist, dass sie das elektrisch betätigte Lenksystem (60) mit Strom versorgt.

13. Vollelektrische Scherenhebebühne (10) nach Anspruch 10, ferner umfassend einen Stützelementwinkelsensor (136) und eine Fahrzeugsteuerung (124), wobei der Stützelementwinkelsensor (136) dazu konfiguriert ist, einen Hubwinkel von mindestens einem Stützelement der faltbaren Reihe verbundener Stützelemente (27) zu überwachen, wobei die Fahrzeugsteuerung (124) mit dem Stützelementwinkelsensor (136) in Verbindung steht und dazu konfiguriert ist, eine Höhe der Arbeitsplattform (22) unter Verwendung des Hubwinkels zu bestimmen.

14. Vollelektrische Scherenhebebühne (10) nach Anspruch 13, wobei die Fahrzeugsteuerung (124) ferner mit dem elektrischen Antriebsmotor (50) in Verbindung steht und dazu konfiguriert ist, eine Antriebsgeschwindigkeit der vollelektrischen Scherenhebebühne (10) basierend auf der Höhe der Arbeitsplattform (22) zu begrenzen.

## Revendications

1. Plateforme élévatrice à ciseaux entièrement électrique (10) comprenant :
une base (12) ayant une pluralité de roues (14A, 14B) ; un mécanisme de plateforme élévatrice à ciseaux (20) ayant une première extrémité (24) accouplée à la base (12) et mobile entre une position étendue et une position rétractée, le mécanisme de plateforme élévatrice à ciseaux (20) comprenant une série pliante d'éléments de support reliés (27) ;
une plateforme de travail (22) configurée pour supporter une charge, la plateforme de travail (22) étant accouplée à et supportée par une seconde extrémité (26) du mécanisme de plateforme élévatrice à ciseaux (20) ;
un actionneur linéaire (28) configuré pour déplacer sélectivement le mécanisme de plateforme élévatrice à ciseaux (20) entre la position étendue et la position rétractée, l'actionneur linéaire (28) ayant un moteur de plateforme élévatrice électrique (34), l'actionneur linéaire (28) comportant un ensemble tube-poussoir (30) comportant un tube externe de protection (36) et un tube-poussoir (38), le tube externe de protection (36) ayant une partie de raccordement de tourillon (42) accouplant en rotation le tube externe de protection (36) à un élément de support de la série pliante d'éléments de support reliés (27), le tube-poussoir (38) ayant une extrémité de raccordement (48) accouplant en rotation le tube-poussoir (38) à un autre élément de support de la série pliante d'éléments de support reliés (27) ; et
une batterie (16) configurée pour appliquer une puissance au moteur de plateforme élévatrice électrique (34).

2. Plateforme élévatrice à ciseaux entièrement électrique (10) selon la revendication 1, comprenant en outre :
un moteur d'entraînement électrique (50) configuré pour entraîner en rotation au moins une roue de la pluralité de roues (14A, 14B) pour propulser la plateforme élévatrice à ciseaux entièrement électrique (10) ; et
un système de direction actionné électriquement (60) fonctionnellement accouplé à au moins l'une de la pluralité de roues (14A, 14B) pour diriger la plateforme élévatrice à ciseaux entièrement électrique (10) ;
dans laquelle la batterie (16) est en outre configurée pour appliquer une puissance au moteur d'entraînement électrique (50) et au système de direction actionné électriquement (60).

3. Plateforme élévatrice à ciseaux entièrement électrique (10) selon la revendication 2, dans laquelle le mécanisme de plateforme élévatrice à ciseaux (20) comprend en outre un capteur d'angle d'élément de support (136) configuré pour surveiller un angle de levage d'au moins un élément de support de la série pliante d'éléments de support reliés (27), la plateforme élévatrice à ciseaux entièrement électrique (10) comprenant en outre :
un dispositif de commande de véhicule (124) en communication avec le capteur d'angle d'élément de support (136) et le moteur d'entraînement électrique (50), le dispositif de commande de véhicule (124) étant configuré pour déterminer une hauteur de la plateforme de travail (22) à l'aide de l'angle de levage et pour limiter une vitesse d'entraînement de la plateforme élévatrice à ciseaux entièrement électrique (10) sur la base de la hauteur de la plateforme de travail (22).

4. Plateforme élévatrice à ciseaux entièrement électrique (10) selon la revendication 1, comprenant en outre :
un moteur d'entraînement électrique (50) configuré pour entraîner en rotation au moins une roue de la pluralité de roues (14A, 14B) pour propulser la plateforme élévatrice à ciseaux entièrement électrique (10) ; et
un système de direction actionné électriquement (60) fonctionnement accouplé à au moins l'une de la pluralité de roues (14A, 14B) pour diriger la plateforme élévatrice à ciseaux entièrement électrique (10) ;
dans laquelle la batterie (16) est en outre configurée pour appliquer une puissance au moteur d'entraînement électrique (50) et au système de direction actionné électriquement (60).

5. Plateforme élévatrice à ciseaux entièrement électrique (10) selon la revendication 4, comprenant en outre un capteur d'angle d'élément de support (136) et un dispositif de commande de véhicule (124), le capteur d'angle d'élément de support (136) étant configuré pour surveiller un angle de levage d'au moins un élément de support de la série pliante d'éléments de support reliés (27), le dispositif de commande de véhicule (124) étant en communication avec le capteur d'angle d'élément de support (136) et configuré pour déterminer une hauteur de la plateforme de travail (22) à l'aide de l'angle de levage.

6. Plateforme élévatrice à ciseaux entièrement électrique (10) selon la revendication 5, dans laquelle le dispositif de commande de véhicule (124) est en outre en communication avec le moteur d'entraînement électrique (50) et est configuré pour limiter une vitesse d'entraînement de la plateforme élévatrice à ciseaux entièrement électrique (10) sur la base de la hauteur de la plateforme de travail (22).

7. Plateforme élévatrice à ciseaux entièrement électrique (10) selon la revendication 6, dans laquelle la pluralité de roues (14A, 14B) comporte deux roues avant (14B) et deux roues arrière (14A), et le système de direction actionné électriquement (60) s'étend entre les deux roues avant (14B).

8. Plateforme élévatrice à ciseaux entièrement électrique (10) selon la revendication 7, dans laquelle le système de direction actionné électriquement (60) comprend :
une première articulation (120) et une seconde articulation (122) chacune accouplées à l'une des deux roues avant (14B) ;
une première biellette de direction (100) ayant une première extrémité accouplée de façon pivotante à la première articulation (120) et une seconde extrémité accouplée de façon pivotante à une billette d'entraînement (74) ;
une seconde biellette de direction (102) ayant une première extrémité accouplée de façon pivotante à la seconde articulation (122) et une seconde extrémité accouplée de façon pivotante à la biellette d'entraînement (74) ; et
un actionneur linéaire électrique (62) accouplé à la biellette d'entraînement (74) et configuré pour régler une orientation des deux roues avant (14B) par rapport à la base (12).

9. Plateforme élévatrice à ciseaux entièrement électrique (10) selon la revendication 8, dans laquelle un mouvement de l'actionneur linéaire électrique (62) le long d'un premier axe permet la translation de la biellette d'entraînement (74) le long d'un second axe parallèle au premier axe, et dans laquelle un mouvement de la biellette d'entraînement (74) le long du second axe pivote la première biellette de direction (100) par rapport à la première articulation (120) et pivote la seconde biellette de direction (102) par rapport à la seconde articulation (122), et dans laquelle un pivotement de la première biellette de direction (100) par rapport à la première articulation (120) et un pivotement de la seconde biellette de direction (102) par rapport à la seconde articulation (122) règlent l'orientation des deux roues avant (14B) par rapport à la base (12).

10. Plateforme élévatrice à ciseaux entièrement électrique (10) selon la revendication 1, comprenant en outre :
un moteur d'entraînement électrique (50) configuré pour entraîner en rotation au moins une roue de la pluralité de roues (14A, 14B) pour propulser la plateforme élévatrice à ciseaux entièrement électrique (10),
dans laquelle la batterie (16) est en outre configurée pour appliquer une puissance au moteur d'entraînement électrique (50).

11. Plateforme élévatrice à ciseaux entièrement électrique (10) selon la revendication 10, comprenant en outre un système de direction actionné électriquement (60) fonctionnellement accouplé à au moins l'une de la pluralité de roues (14A, 14B) pour diriger la plateforme élévatrice à ciseaux entièrement électrique (10).

12. Plateforme élévatrice à ciseaux entièrement électrique (10) selon la revendication 11, dans laquelle la batterie (16) est en outre configurée pour appliquer une puissance au système de direction actionné électriquement (60).

13. Plateforme élévatrice à ciseaux entièrement électrique (10) selon la revendication 10, comprenant en outre un capteur d'angle d'élément de support (136) et un dispositif de commande de véhicule (124), le capteur d'angle d'élément de support (136) étant configuré pour surveiller un angle de levage d'au moins un élément de support de la série pliante d'éléments de support reliés (27), le dispositif de commande de véhicule (124) étant en communication avec le capteur d'angle d'élément de support (136) et configuré pour déterminer une hauteur de la plateforme de travail (22) à l'aide de l'angle de levage.

14. Plateforme élévatrice à ciseaux entièrement électrique (10) selon la revendication 13, dans laquelle le dispositif de commande de véhicule (124) est en outre en communication avec le moteur d'entraînement électrique (50) et est configuré pour limiter une vitesse d'entraînement de la plateforme élévatrice à ciseaux entièrement électrique (10) sur la base de la hauteur de la plateforme de travail (22).
